# EUROPEAN PATENT SPECIFICATION

(11) **EP 2 889 122 B1**
(45) Date of publication and mention of the grant of the patent: **17.10.2018**
(21) Application number: 14199075.4
(22) Date of filing: 18.12.2014
(51) Int. Cl.: B29C 65/16, B29C 65/78, B31B 70/81, B29L 5/00

(54) **Plastic bag making apparatus**
Vorrichtung zur Herstellung von Kunststoffbeuteln
Appareil de production de sacs plastiques

(30) Priority: 26.12.2013 JP 2013268925
(43) Date of publication of application: 01.07.2015
(60) Divisional application: 18150840.9
(73) Proprietor: Totani Corporation, Kyoto-shi, Kyoto 601-8213 (JP)
(72) Inventor: Totani, Mikio, Kyoto-shi, Kyoto 601-8213 (JP)
(74) Representative: Pfenning, Meinig & Partner mbB

(56) References cited:
- FR-A1- 2 525 182
- JP-B1- 5 373 944
- US-A- 4 430 070
- US-A- 4 673 383
- US-A- 5 279 693

## Description

### Technical Field

The invention relates to an apparatus for successively making plastic bags.

### Background

Japanese Patent Publication No. 3,733,085 discloses an apparatus for successively making plastic bags each of which includes a panel portion and a zipper portion. In the apparatus, two webs of panel material are superposed with each other, a body of zipper material being inserted between the webs of panel material to extend longitudinally of the webs of panel material. The webs of panel material and the body of zipper material are fed longitudinally thereof and intermittently for a length. The webs of panel material comprise plastic films while the body of zipper material is made of plastic material. The apparatus includes a heat seal device by which the webs of panel material and the body of zipper material are heat sealed with each other longitudinally thereof when they are stopped temporarily whenever being fed intermittently. In addition, the webs of panel material are heat sealed with each other widthwise thereof when they are stopped temporarily whenever being fed intermittently. The webs of panel material and the body of zipper material are then crosscut widthwise of the webs of panel material when they are stopped temporarily whenever being fed intermittently. The apparatus can therefore successively make the plastic bags of the webs of panel material and the body of zipper material. The panel portion is formed of the webs of pane! material while the zipper portion is formed of the body of zipper material.

In the apparatus, the webs of panel material and the body of zipper material are stopped temporarily to be heat sealed with each other longitudinally thereof. The webs of panel material and the body of zipper material can therefore be heat sealed with each other appropriately to obtain a seal strength kept constant. However, the heat seal device has to be long considerably and disposed longitudinally of the webs of panel material, resulting in a problem of space for installation. In addition, the body of zipper material comprises male and female members including fitted portions, the fitted portions being fitted with each other. The fitted portions have to be kept from being damaged when the webs of panel material and the body of zipper material are heat sealed with each other, the heat seal device being therefore complicated in structure.

On the other hand, US Patent No. 5,279,693 discloses an apparatus including a pair of rollers opposed to each other. In the apparatus, two webs of panel material are superposed with each other, a body of zipper material being inserted between the webs of panel material to extend longitudinally of the webs of panel material. The webs of panel material and the body of zipper material are fed longitudinally thereof to be directed to, sandwiched between and pressurized by the rollers. The apparatus further includes a laser beam irradiator irradiating laser beam onto the webs of panel material and the body of zipper material at a position upstream of the rollers when the webs of panel material and the body of zipper material are fed longitudinally thereof, to heat and melt the webs of panel material and the body of zipper material with the laser beam. The webs of panel material and the body of zipper material are therefore welded to each other when being pressurized by the rollers.

The apparatus has therefore not to include the heat seal device long considerably and disposed longitudinally of the webs of panel material, not resulting in the problem of space for installation. The fitted portions can be kept from being damaged in the male and female members of body of zipper material, without difficulty. However, in this case, the webs of panel material and the body of zipper material have to be fed not intermittently but continuously at a speed which is not changed by time, to heat and melt the webs of panel material and the body of zipper material uniformly. It should be understood that the speed is changed by time inevitably if the webs of panel material and the body of zipper material are fed intermittently to be stopped temporarily. Consequently, the webs of panel material cannot be stopped temporarily to be heat sealed with each other widthwise thereof. The webs of panel material and the body of zipper material cannot be stopped temporarily to be crosscut widthwise thereof.

It is therefore an object of the invention to provide an apparatus for successively making plastic bags by utilizing laser beam in an appropriate manner to overcome the above problems.

### Summary of the Invention

According to the invention, the apparatus includes a pair of rollers opposed to each other. The apparatus further includes a feeding device by which two webs of panel material are superposed with each other, a body of zipper material being inserted between the webs of panel material to extend longitudinally of the webs of panel material. The webs of panel material and the body of zipper material are fed longitudinally thereof to be directed to, sandwiched between and pressurized by the rollers. The apparatus further includes a laser beam irradiator irradiating laser beam onto the webs of panel material and the body of zipper material at a position upstream of the rollers when the webs of panel material and the body of zipper material are fed longitudinally thereof, to heat and melt the webs of panel material and the body of zipper material with the laser beam. The webs of panel material and the body of zipper material are therefore welded to each other when being pressurized by the rollers. The apparatus further includes a control device connected to the feeding device and the irradiator, the feeding device being controlled by the control device so that the webs of panel material and the body of zipper material are fed intermittently at a speed predetermined to be changed by time. The irradiator is controlled by the control device and on a feedforward control basis for the laser beam to be regulated in amount, the amount being calculated from the speed predetermined, to obtain a calculated value of amount. The laser beam is regulated in accordance with the calculated value to heat and melt the webs of panel material and the body of zipper material uniformly irrespective of the speed being changed. The webs of panel material and the body of zipper material are therefore welded to each other to obtain a welded strength kept constant. The apparatus is arranged to successively make the plastic bags of the webs of panel material and the body of zipper material.

In a preferred embodiment, the amount is calculated to be proportional to the speed predetermined. In addition, the webs of panel material are curved along the rollers to have curved portions formed therein, wedge clearances being formed between the curved portions and the body of zipper material. The irradiator comprises two irradiators opposed to the wedged clearances, the irradiators irradiating the laser beams onto the webs of panel material and the body of zipper material in the wedged clearances.

The body of zipper material comprises male and female members including fitted portions and flange portions, the fitted portions being fitted with each other. The irradiator irradiates the laser beam onto the webs of panel material and the flange portions on opposite sides of the fitted portions to heat and melt the webs of panel material and the flange portions with the laser beam so that the webs of panel material and the flange portions are welded to each other along two welded lines without heating the fitted portions with the laser beam.

The irradiator comprises a source of laser beam, a ball lens and a glass plate, the ball lens and the glass plate being interposed between the source of laser beam and the webs of panel material and between the source of laser beam and the flange portions. The glass plate is V-shaped in section to have a central portion protruding toward the webs of panel material and the flange portions. The laser beam is magnified and divided by the ball lens and the glass plate so that the webs of panel material and the flange portions are welded to each other along two welded lines.

The irradiator may comprise two irradiators each of which irradiates the laser beam onto the webs of panel material and the flange portions so that the webs of panel material and the flange portions are welded to each other along two welded lines.

A treatment of laser absorption may be applied to the body of zipper material so that the body of zipper material absorbs the laser beam to generate heat, for heating and melting the body of zipper material.

### Brief Description of the Drawings

Fig. 1 is a side view (A) of a preferred embodiment of the invention and a plan view (B) of the apparatus of (A).
Fig. 2 is a graph (A) of the speed at which the webs of panel material and the body of zipper material of Fig. 1 are fed and a graph (B) of the amount of laser beam of the laser beam irradiator of Fig. 1.
Fig. 3 is an enlarged elevational view (A) of the webs of panel material and the body of zipper material of Fig. 1, an explanatory view (B) of the laser beam irradiator of Fig. 1 and a sectional view (C) of the laser beam of (B) after being divided.
Fig. 4 is a plan view of the plastic bag derived by the apparatus of Fig. 1.
Fig. 5 is an enlarged elevational view (A) of another embodiment and a side view (B) of another embodiment.
Fig. 6 is an enlarged elevational view (A) of another embodiment, a side view (B) of another embodiment and a plan view (C) of the apparatus of (B).

### Best Mode to Carry Out the Invention

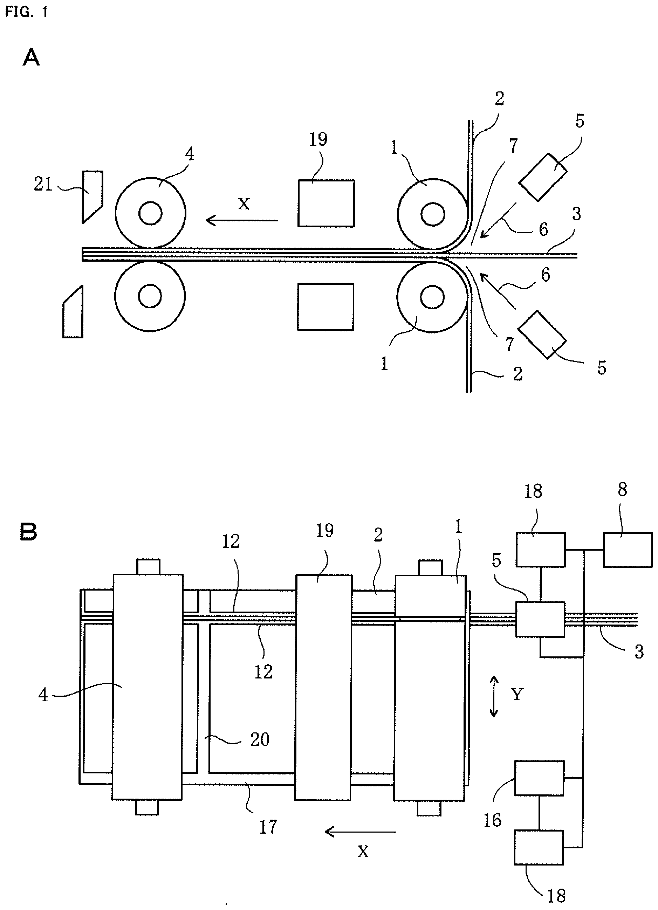

Turning now to the drawings, Fig. 1 illustrates an apparatus for successively making plastic bags, according to the invention. The apparatus includes a pair of rollers 1 opposed to each other. The apparatus further includes a feeding device by which two webs of panel material 2 are superposed with each other, a body of zipper material 3 being inserted between the webs of panel material 2 to extend longitudinally of the webs of panel material 2. The webs of panel material 2 comprise plastic films to have a width while the body of zipper material 3 is made of plastic material. The webs of panel material 2 and the body of zipper material 3 are fed longitudinally thereof to be directed to, sandwiched between and pressurized by the rollers 1. For example, the feeding device includes a pair of rollers 4, the webs of panel material 2 and the body of zipper material 3 passing through the rollers 1 to be directed to and sandwiched between the rollers 4 after the body of zipper material 3 is inserted between the webs of panel material 2. The rollers 4 are rotated by a motor so that the webs of panel material 2 and the body of zipper material 3 are fed in a direction X predetermined longitudinally of the webs of panel material 2 and the body of zipper material 3.

The apparatus further includes a laser beam irradiator 5 irradiating laser beam 6 onto the webs of panel material 2 and the body of zipper material 3 at a position upstream of the rollers 1 when the webs of panel material 2 and the body of zipper material 3 are fed longitudinally thereof, to heat and melt the webs of panel material 2 and the body of zipper material 3 with the laser beam. In the embodiment, the webs of panel material 2 are directed to the rollers 1 from above and below to be curved along the rollers 1. The body of zipper material 3 is inserted between the webs of panel material 2 when the webs of panel material 2 are sandwiched between the rollers 1. The webs of panel material 2 have therefore curved portions formed therein, wedged clearances being formed between the curved portions and the body of zipper material 3. The irradiator 5 comprises two irradiators opposed to the wedged clearances, the irradiators irradiating the laser beams 6 onto the webs of panel material 2 and the body of zipper material 3 in the wedged clearances, to heat and melt the webs of panel material 2 and the body of zipper material 3 with the laser beams.

The webs of panel material 2 and the body of zipper material 3 are then directed to, sandwiched between and pressurized by the rollers 1 which are rotated by friction when the webs of panel material 2 and the body of zipper material 3 are fed longitudinally thereof. The rollers 1 may be rotated by a motor. The webs of panel material 2 and the body of zipper material 3 are therefore welded to each other when being pressurized by the rollers 1.

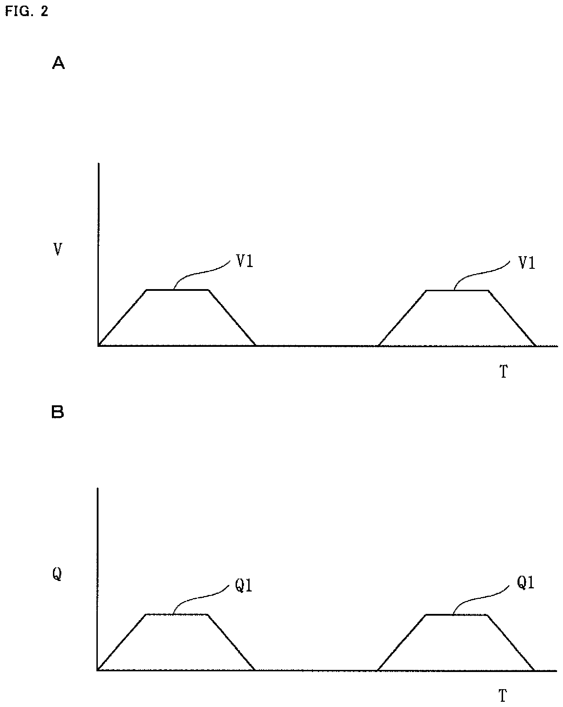

The apparatus further includes a control device 8 connected to the feeding device and the irradiator 5, the feeding device being controlled by the control device 8 so that the webs of panel material 2 and the body of zipper material 3 are fed intermittently for a length at a speed V predetermined to be changed by time T, as shown in Fig. 2. In the embodiment, the feeding device includes the rollers 4 rotated by the motor, as described previously. The control device 8 is therefore connected to the motor, the motor being controlled by the control device 8 so that the webs of panel material 2 and the body of zipper material 3 are fed intermittently to be stopped temporarily. For example, the webs of panel material 2 and the body of zipper material 3 are accelerated so that the speed V is changed and heightened up to a level V1, when the webs of panel material 2 and the body of zipper material 3 are fed again after being stopped temporarily. The speed V is then kept at the level V1. Subsequently, the webs of panel material 2 and the body of zipper material 3 are decelerated so that the speed V is lowered from the level V1.

Under the circumferences, the irradiator 5 is controlled by the control device 8 and on a feedforward control basis for the laser beam 6 to be regulated in amount Q, the amount Q being calculated from the speed V predetermined, to obtain a calculated value of amount Q. For example, the amount Q is calculated from the speed V which is predetermined by the control device 8 in accordance with information input by operator. The information includes the length for which the webs of panel material 2 and the body of zipper material 3 are fed intermittently, and the like. The control device 8 comprises a computer. The amount Q is calculated to be proportional to the speed V predetermined.

The laser beam 6 is then regulated in accordance with the calculated value to heat and melt the webs of panel material 2 and the body of zipper material 3 uniformly irrespective of the speed V being changed. For example, the laser beam 6 is regulated in accordance with the calculated value to have the amount Q per unit time, which is increased up to a level Q1 when the speed V is heightened up to the level V1. The amount Q is kept at the level Q1 when the speed V is kept at the level V1. The amount Q is decreased from the level Q1 when the speed V is lowered from the level V1. As a result, the irradiator 5 irradiates the laser beam 6 onto the webs of panel material 2 and the body of zipper material 3, to heat and melt them uniformly irrespective of the speed V being changed. The webs of panel material 2 and the body of zipper material 3 are therefore welded to each other to obtain a welded strength kept constant.

It should be understood that the speed V is changed by time T inevitably when the webs of panel material 2 and the body of zipper material 3 are fed intermittently to be temporarily stopped. In particular, the speed V is changed drastically when the apparatus is operated at high speed. In view of this challenge, in the apparatus, the irradiator 5 is controlled not on a feedback control basis but on the feedforward control basis in which the amount Q is calculated from the speed V predetermined, to obtain the calculated value of amount Q. In other words, the amount Q is calculated previously to obtain the calculated value. The laser beam 6 is then regulated not in response to a detecting signal but in accordance with the calculated value. Consequently, unlike an apparatus arranged on the feedback control basis, the apparatus has no problem of responsiveness. The laser beam 6 can therefore be regulated in amount Q adequately to heat and melt the webs of panel material 2 and the body of zipper material 3 uniformly irrespective of the speed V being changed drastically.

It should also be understood that the invention is based on an idea of applying the feedforward control basis to the irradiator 5. As a result, the irradiator 5 is controlled by the control device 8 precisely so that the laser beam 6 is regulated in amount Q adequately even if the apparatus is operated at high speed and the speed V is changed drastically. In this connection, it should be noted that the feedforward control basis is known in itself. However, in the prior art, there has been no idea of applying the feedforward control basis to the irradiator 5 incorporated into the apparatus to successively make plastic bags. Consequently, the webs of panel material 2 and the body of zipper material 3 have been forced to be fed not intermittently but continuously when utilizing the laser beam 6, as in the case of the apparatus of US Patent No. 5,279,693. This fact would support that the invention has an inventive step over the prior art.

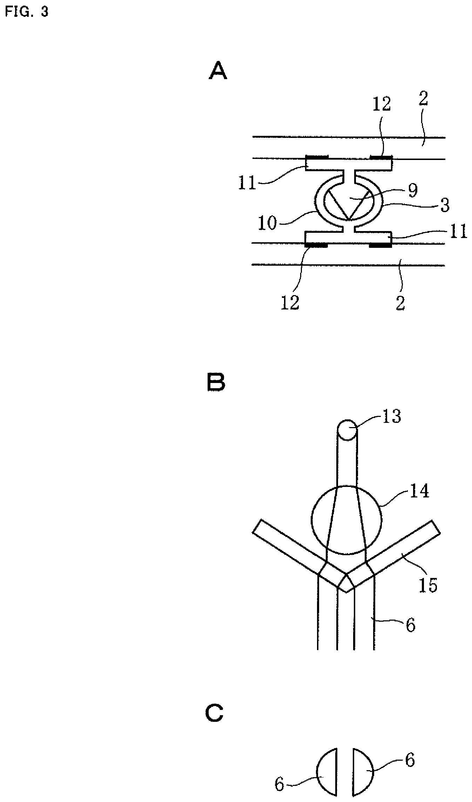

In the embodiment, the body of zipper material 3 comprises male and female members 9 and 10 including fitted portions and flange portions 11, the fitted portions being fitted with each other, as shown in Fig. 3. The irradiator 5 irradiates the laser beam 6 onto the webs of panel material 2 and the flange portions 11 on opposite sides of the fitted portions to heat and melt the webs of panel material 2 and the flange portions 11 with the laser beam 6 so that the webs of panel material 2 and the flange portions 11 are welded to each other along two weld lines 12 without heating the fitted portions with the laser beam 6. The fitted portions can therefore be kept from being damaged in the male and female members 9 and 10 of body of zipper material 3, without difficulty.

In addition, the irradiator 5 comprises a source of laser beam 13, a ball lens 14 and a glass plate 15, the ball lens 14 and the glass plate 15 being interposed between the source of laser beam 13 and the webs of panel material 2 and between the source of laser beam 13 and the flange portions 11. The glass plate 15 is V-shaped in section to have a central portion protruding toward the webs of panel material 2 and the flange portions 11. The laser beam 6 is magnified and divided by the ball lens 14 and the glass plate 15 so that the webs of panel material 2 and the flange portions 11 are welded to each other along two welded lines 12.

The irradiator 5 comprises two irradiators opposed to the wedged clearances, as described previously. Each of the irradiators 5 may comprise two irradiators each of which irradiates the laser beam 6 onto the webs of panel material 2 and the flange portion 11 so that the webs of panel material 2 and the flange portions 11 are welded to each other along two welded lines.

A treatment of laser absorption may be applied to the body of zipper material 3 so that the body of zipper material 3 absorbs the laser beam 6 to generate heat, for heating and melting the body of zipper material 3. In particular, the treatment of laser absorption may be applied to the flange portions 11 so that the flange portions 11 absorbs the laser beam 6 to generate heat, for heating and melting the flange portions 11. For example, the treatment of laser absorption may comprise a treatment of indented surface applied to the body of zipper material 3. It may comprise a treatment of coating a layer of absorbent or ink on the body of zipper material 3. It may comprise a treatment of mixing the absorbent into the body of zipper material 3. It may comprise a treatment of placing a tape of absorbent on the body of zipper material 3. A treatment of laser absorption may be applied not only to the body of zipper material 3 but also to the webs of panel material 2.

The apparatus includes the rollers 1 and the irradiator 5, as described previously. The apparatus may further include a laser beam irradiator 16 irradiating laser beam onto the webs of panel material 2 at the position upstream of the rollers 1 when the webs of panel material 2 are fed longitudinally thereof, to heat and melt the webs of panel material 2. In this case, the webs of panel material 2 are welded to each other along a welded line 17 when being pressurized by the rollers 1.

The apparatus may further include scanning devices 18 connected to the irradiators 5 and 16. The control device 8 is connected to the scanning devices 18, the scanning device 18 being controlled by the control device 8 so that the irradiators 5 and 16 are moved for scanning. The scanning devices 18 may comprise actuators such as galvanometers by which the irradiators 5 and 16 are moved for scanning in a direction Y predetermined widthwise of the webs of panel material 2. The welded lines 12 and 17 can therefore be formed on the webs of panel material 2 and the body of zipper material 3 to have widths which are predetermined arbitrarily.

The apparatus further includes a heat seal device 19 by which the webs of panel material 2 are heat sealed with each other widthwise thereof when they are stopped temporarily whenever being fed intermittently, to make a heat seal line 20 formed. The apparatus may include a laser beam irradiator irradiating laser beam onto the webs of panel material 2 at the position upstream of the rollers 1, the irradiator being moved for scanning to make a welded line 20 formed. The apparatus further include a cutter 21 by which the webs of panel material 2 and the body of zipper material 3 are crosscut widthwise of the webs of panel material 2 when they are stopped temporarily whenever being fed intermittently, to successively make the plastic bags of the webs of panel material 2 and the body of zipper material 3.

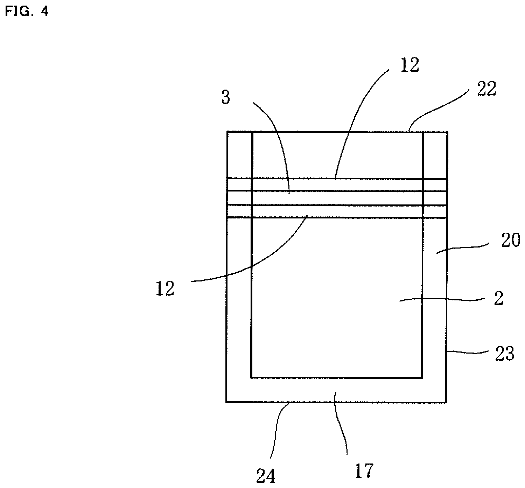

The apparatus can therefore successively make the plastic bags each of which includes a panel portion and a zipper portion. The panel portion is formed of the webs of panel material 2 while the zipper portion is formed of the body of zipper material 3, as shown in Fig. 4. The plastic bag has a top edge 22 along which the zipper portion extends. The plastic bag has opposite side edges 23 along which the heat seal lines or welded lines 20 extend. The plastic bag has a bottom edge 24 along which the welded line 17 extends.

The apparatus can heat and melt the webs of panel material 2 and the body of zipper material 3 uniformly irrespective of the speed V being changed, when the webs of panel material 2 and the body of zipper material 3 are fed intermittently to be stopped temporarily, as described previously. The webs of panel material 2 and the body of zipper material 3 are welded to each other to obtain a welded strength kept constant.

Consequently, the webs of panel material 2 and the body of zipper material 3 have not to be heat sealed with each other longitudinally thereof. The apparatus has not to include a heat seal device long considerably and disposed longitudinally of the webs of panel material, not resulting in a problem of space for installation. The apparatus has merely to include the irradiator 5 irradiating the laser beam 6 when the webs of panel material 2 and the body of zipper material 3 are fed longitudinally thereof, to be compact longitudinally of the webs of panel material 2. The fitted portions can be kept from being damaged in the male and female members 9 and 10 of body of zipper material 3, without difficulty, as also described previously.

In addition, in the apparatus, the webs of panel material 2 can be stopped temporarily to be heat sealed widthwise thereof by the heat seal device 19. The webs of panel material 2 and the body of zipper material 3 can be stopped temporarily to be crosscut widthwise thereof by the cutter 21.

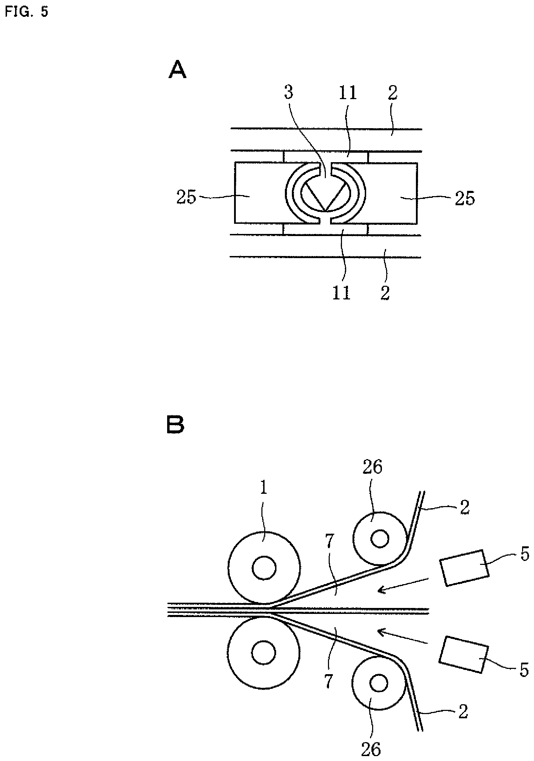

Fig. 5 illustrates another embodiment in which plates 25 are inserted between the flange portions 11 of body of zipper material 3 when the webs of panel material 2 and the body of zipper material 3 are directed to the rollers 1 so that the webs of panel material 2 and the body of zipper material 3 are sandwiched between the rollers 2 to be pressurized adequately (Fig. 5A). The webs of panel material 2 may be engaged with rollers 26 so that wedged clearances 7 are formed by the rollers 26 (Fig. 5B). The rollers 1 may comprise rubber rollers having elasticity by which the webs of panel material 2 and the body of zipper material 3 are pressurized adequately, without using the plates 25.

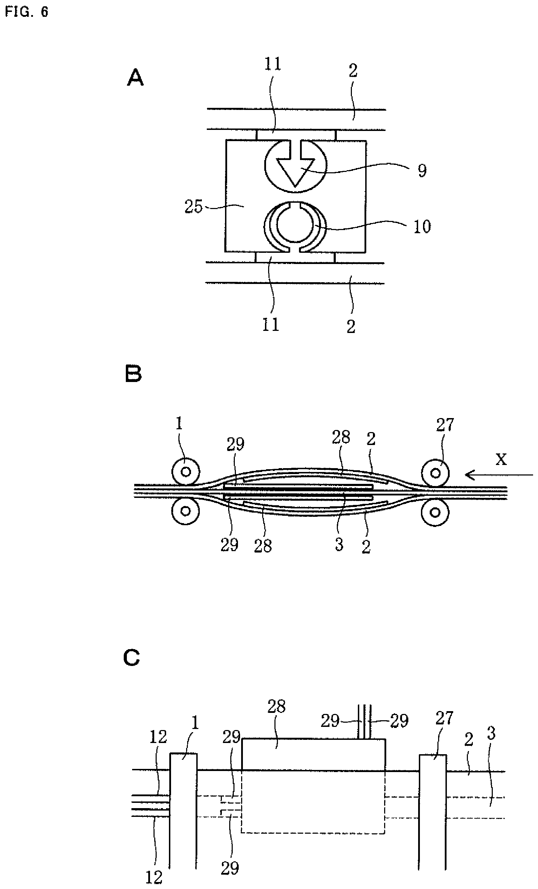

Fig. 6 illustrates another embodiment in which the body of zipper material 3 is guided by a plate 25 when the webs of panel material 2 and the body of zipper material 3 are pressurized by the rollers 1 so that the male and female members 9 and 10 are separated from each other once (Fig. 6A). The feeding device further include a pair of rollers 27, the webs of panel material 2 and the body of zipper material 3 being directed to and sandwiched between the rollers 27 (Fig. 6B and 6C) A pair of plates 28 are inserted between the webs of panel material 2 and the body of zipper material 3 so that the webs of panel material 2 and the body of zipper material 3 are guided by the plates 28 to be spaced from each other. The irradiator comprises four fibers 29 inserted between the plates 28 and the body of zipper material 3 in the direction widthwise of the webs of panel material 2 to extend longitudinally of the webs of panel material between the plate 28 and the body of zipper material 3. The laser beams are directed through the fibers 29 so that the fibers 29 irradiates the laser beams onto the webs of panel material 2 and the body of zipper material 3 to heat and melt the webs of panel material 2 and the body of zipper material 3 with the laser beams. The webs of panel material 2 and the body of zipper material 3 are then pressurized by the rollers 1 to be welded to each other.

## Claims

1. An apparatus for successively making plastic bags, comprising:
a pair of rollers (1) opposed to each other;
a feeding device (4) by which two webs of panel material (2) are superposed with each other, a body of zipper material (3) being inserted between the webs of panel material (2) to extend longitudinally of the webs of panel material (2), the webs of panel material (2) and the body of zipper material (3) being fed longitudinally thereof to be directed to, sandwiched between and pressurized by the rollers (1); and
a laser beam irradiator (5) irradiating laser beam (6) onto the webs of panel material (2) and the body of zipper material (3) at a position upstream of the rollers (1) when the webs of panel material (2) and the body of zipper material (3) are fed longitudinally thereof, to heat and melt the webs of panel material (2) and the body of zipper material (3) with the laser beam (6), the webs of panel material (2) and the body of zipper material (3) being welded to each other when being pressurized by the rollers (1),
the apparatus being arranged to successively make the plastic bags of the webs of panel material (2) and the body of zipper material (3),
the apparatus being **characterized by**
a control device (8) connected to the feeding device (4) and the irradiator (5), the feeding device (4) being controlled by the control device (8) so that the webs of panel material (2) and the body of zipper material (3) are fed intermittently at a speed (V) predetermined to be changed by time (T), the irradiator (5) being controlled by the control device (8) and on a feedforward control basis for the laser beam (6) to be regulated in amount (Q), the amount (Q) being calculated from the speed (V) predetermined, to obtain a calculated value of amount (Q), the laser beam (6) being regulated in accordance with the calculated value to heat and melt the webs of panel material (2) and the body of zipper material (3) uniformly irrespective of the speed (V) being changed, the webs of panel material (2) and the body of zipper material (3) being welded to each other to obtain a welded strength kept constant.

2. The apparatus as set forth in claim 1 wherein the amount (Q) is calculated to be proportional to the speed (V) predetermined.

3. The apparatus as set forth in any of claims 1 or 2 wherein the webs of panel material (2) are curved along the rollers (1) to have curved portions formed therein, wedged clearances being formed between the curved portions and the body of zipper material (3), the irradiator (5) comprising two irradiators opposed to the wedged clearances, the irradiators (5) irradiating the laser beams (6) onto the webs of panel material (2) and the body of zipper material (3) in the wedged clearances.

4. The apparatus as set forth in any of claims 1 to 3 wherein the body of zipper material (3) comprises male and female members (9, 10) including fitted portions and flange portions (11), the fitted portions being fitted with each other, the irradiator (5) irradiating the laser beam (6) onto the webs of panel material (2) and the flange portions (11) on opposite sides of the fitted portions to heat and melt the webs of panel material (2) and the flange portions (11) with the laser beam (6) so that the webs of panel material (2) and the flange portions (11) are welded to each other along two welded lines (12) without heating the fitted portions with the laser beam (6).

5. The apparatus as set forth in claim 4 wherein the irradiator (5) comprises a source of laser beam (13), a ball lens (14) and a glass plate (15), the ball lens (14) and the glass plate (15) being interposed between the source of laser beam (13) and the webs of panel material (2) and between the source of laser beam (13) and the flange portions (11), the glass plate (15) being V-shaped in section to have a central portion protruding toward the webs of panel material (2) and the flange portions (11), the laser beam (6) being magnified and divided by the ball lens (14) and the glass plate (15) so that the webs of panel material (2) and the flange portions (11) are welded to each other along two welded lines (12).

6. The apparatus as set forth in any of claims 4 or 5 wherein the irradiator (5) comprises two irradiators each of which irradiates the laser beam (6) onto the webs of panel material (2) and the flange portions (11) so that the webs of panel material (2) and the flange portions (11) are welded to each other along two welded lines (12).

7. The apparatus as set forth in any of claims 1 to 6 wherein a treatment of laser absorption is applied to the body of zipper material (3) so that the body of zipper material (3) absorbs the laser beam (6) to generate heat, for heating and melting the body of zipper material (3).

## Patentansprüche

1. Vorrichtung zum aufeinanderfolgenden Herstellen von Kunststoffbeuteln, welche aufweist:
ein Paar von Rollen (1), die einander gegenüberliegen;
eine Zuführungsvorrichtung (4), durch die zwei Bahnen aus Tafelmaterial (2) übereinandergelegt werden, wobei ein Körper aus Reißverschlussmaterial (3) zwischen die Bahnen aus Tafelmaterial (2) eingefügt wird, um sich in Längsrichtung der Bahnen aus Tafelmaterial (2) zu erstrecken, und die Bahnen aus Tafelmaterial (2) und der Körper aus Reißverschlussmaterial (3) in ihrer Längsrichtung zugeführt werden, um zu den Rollen (1) geleitet, zwischen diesen eingeklemmt und mit Druck beaufschlagt zu werden; und
eine Laserbestrahlungsvorrichtung (5), die einen Laserstrahl (6) auf die Bahnen aus Tafelmaterial (2) und den Körper aus Reißverschlussmaterial (3) an einer Position stromaufwärts der Rollen (1) strahlt, wenn die Bahnen aus Tafelmaterial (2) und der Körper aus Reißverschlussmaterial (3) in ihrer Längsrichtung zugeführt werden, um die Bahnen aus Tafelmaterial (2) und den Körper aus Reißverschlussmaterial (3) mit dem Laserstrahl (6) zu erwärmen und zu schmelzen, wobei die Bahnen aus Tafelmaterial (2) und der Körper aus Reißverschlussmaterial (3) miteinander verschweißt werden, wenn sie durch die Rollen (1) mit Druck beaufschlagt werden,
wobei die Vorrichtung angeordnet ist, die Kunststoffbeutel aus den Bahnen aus Tafelmaterial (2) und dem Körper aus Reißverschlussmaterial (3) aufeinanderfolgend herzustellen,
welche Vorrichtung **gekennzeichnet ist durch**
eine Steuervorrichtung (8), die mit der Zuführungsvorrichtung (4) und der Bestrahlungsvorrichtung (5) verbunden ist, wobei die Zuführungsvorrichtung (4) von der Steuervorrichtung (8) so gesteuert wird, dass die Bahnen aus Tafelmaterial (2) und der Körper aus Reißverschlussmaterial (3) intermittierend mit einer Geschwindigkeit (V) zugeführt werden, die vorbestimmt ist, zur Zeit (T) geändert zu werden, die Bestrahlungsvorrichtung (5) durch die Steuervorrichtung (8) und auf einer Vorwärtszuführungs-Steuerbasis für den Laserstrahl (6), um in der Menge (Q) reguliert zu werden, wobei die Menge (Q) anhand der vorbestimmten Geschwindigkeit (V) berechnet wird, gesteuert wird, um einen berechneten Wert der Menge (Q) zu erhalten, der Laserstrahl (6) gemäß dem berechneten Wert reguliert wird, um die Bahnen aus Tafelmaterial (2) und den Körper aus Reißverschlussmaterial (3) ungeachtet der Änderung der Geschwindigkeit (V) gleichförmig zu erwärmen und zu schmelzen, und die Bahnen aus Tafelmaterial (2) und der Körper aus Reißverschlussmaterial (3) miteinander verschweißt werden, um eine Schweißfestigkeit zu erhalten, die konstant gehalten wird.

2. Vorrichtung nach Anspruch 1, bei der die Menge (Q) so berechnet wird, dass sie proportional zu der vorbestimmten Geschwindigkeit (V) ist.

3. Vorrichtung nach einem der Ansprüche 1 oder 2, bei der die Bahnen aus Tafelmaterial (2) entlang der Rollen (1) gekrümmt werden, um darin gebildete gekrümmte Bereiche zu haben, wobei keilförmige Zwischenräume zwischen den gekrümmten Bereichen und dem Körper aus Reißverschlussmaterial (3) gebildet werden, und die Bestrahlungsvorrichtung (5) zwei Bestrahlungsvorrichtungen aufweist, die den keilförmigen Zwischenräumen gegenüberliegen, wobei die Bestrahlungsvorrichtungen (5) in den keilförmigen Zwischenräumen die Laserstrahlen (6) auf die Bahnen aus Tafelmaterial (2) und den Körper aus Reißverschlussmaterial (3) strahlen.

4. Vorrichtung nach einem der Ansprüche 1 bis 3, bei der der Körper aus Reißverschlussmaterial (3) ein aufgenommenes und ein aufnehmendes Teil (9, 10) aufweist, enthaltend Passungsbereiche und Flanschbereiche (11), wobei die Passungsbereiche einander angepasst sind, wobei die Bestrahlungsvorrichtung (5) den Laserstrahl (6) auf die Bahnen aus Tafelmaterial (2) und die Flanschbereiche (11) auf entgegengesetzten Seiten der Anpassungsbereiche strahlt, um die Bahnen aus Tafelmaterial (2) und die Flanschbereiche (11) mit dem Laserstrahl (6) so zu erwärmen und zu schmelzen, dass die Bahnen aus Tafelmaterial (2) und die Flanschbereiche (11) entlang zweier Schweißlinien (12) miteinander verschweißt werden, ohne dass die Passungsbereiche von dem Laserstrahl (6) miterwärmt werden.

5. Vorrichtung nach Anspruch 4, bei der die Bestrahlungsvorrichtung (5) eine Laserstrahlquelle (13), eine Kugellinse (14) und eine Glasplatte (15) aufweist, wobei die Kugellinse (14) und die Glasplatte (15) zwischen der Laserstrahlquelle (13) und den Bahnen aus Tafelmaterial (2) und zwischen der Laserstrahlquelle (13) und den Flanschbereichen (11) angeordnet sind, und die Glasplatte (15) im Querschnitt V-förmig ist, um einen mittleren Bereich zu haben, der zu den Bahnen aus Tafelmaterial (2) und den Flanschbereichen (11) vorsteht, wobei der Laserstrahl (6) durch die Kugellinse (14) und die Glasplatte (15) so verstärkt und geteilt wird, dass die Bahnen aus Tafelmaterial (2) und die Flanschbereiche (11) entlang zweier Schweißlinien (12) miteinander verschweißt werden.

6. Vorrichtung nach einem der Ansprüche 4 oder 5, bei der die Bestrahlungsvorrichtung (5) zwei Bestrahlungsvorrichtungen aufweist, von denen jede den Laserstrahl (6) auf die Bahnen aus Tafelmaterial (2) und die Flanschbereiche (11) so strahlt, dass die Bahnen aus Tafelmaterial (2) und die Flanschbereiche (11) entlang zweier Schweißlinien (12) miteinander verschweißt werden.

7. Vorrichtung nach einem der Ansprüche 1 bis 6, bei der eine Laserabsorptionsbehandlung bei dem Körper aus Reißverschlussmaterial (3) so angewendet wird, dass der Körper aus Reißverschlussmaterial (3) den Laserstrahl (6) absorbiert, um Wärme zum Erwärmen und Schmelzen des Körpers aus Reißverschlussmaterial (3) zu erzeugen.

## Revendications

1. Appareil pour produire de façon successive des sacs en matière plastique, comprenant :
une paire de rouleaux (1) qui sont opposés l'un à l'autre ;
un dispositif d'alimentation (4) au moyen duquel deux bandes de matériau de panneau (2) sont superposées l'une sur l'autre, un corps de matériau de fermeture à glissière (3) étant inséré entre les bandes de matériau de panneau (2) de manière à ce qu'il s'étende longitudinalement par rapport aux bandes de matériau de panneau (2), les bandes de matériau de panneau (2) et le corps de matériau de fermeture à glissière (3) étant alimentés longitudinalement par rapport à eux-mêmes de sorte qu'ils soient dirigés sur les rouleaux (1), qu'ils soient pris en sandwich entre ceux-ci et qu'ils soient pressés par ceux-ci ; et
un dispositif d'irradiation de faisceau laser (5) qui irradie un faisceau laser (6) sur les bandes de matériau de panneau (2) et sur le corps de matériau de fermeture à glissière (3) en une position qui se situe en amont des rouleaux (1) lorsque les bandes de matériau de panneau (2) et le corps de matériau de fermeture à glissière (3) sont alimentés longitudinalement par rapport à eux-mêmes, de manière à ce qu'il chauffe et fonde les bandes de matériau de panneau (2) et le corps de matériau de fermeture à glissière (3) à l'aide du faisceau laser (6), les bandes de matériau de panneau (2) et le corps de matériau de fermeture à glissière (3) étant soudés les uns aux autres lorsqu'ils sont pressés par les rouleaux (1) ;
l'appareil étant agencé de manière à ce qu'il produise de façon successive les sacs en matière plastique qui sont constitués par les bandes de matériau de panneau (2) et par le corps de matériau de fermeture à glissière (3) ;
l'appareil étant **caractérisé par** :
un dispositif de commande (8) qui est connecté au dispositif d'alimentation (4) et au dispositif d'irradiation (5), le dispositif d'alimentation (4) étant commandé par le dispositif de commande (8) de telle sorte que les bandes de matériau de panneau (2) et le corps de matériau de fermeture à glissière (3) soient alimentés par intermittence à une vitesse (V) qui est prédéterminée de manière à ce qu'elle soit modifiée en fonction du temps (T), le dispositif d'irradiation (5) étant commandé par le dispositif de commande (8) et sur une base commande en sens direct d'alimentation pour que le faisceau laser (6) soit régulé selon une quantité (Q), la quantité (Q) étant calculée à partir de la vitesse (V) prédéterminée, de manière à obtenir une valeur de quantité calculée (Q), le faisceau laser (6) étant régulé en fonction de la valeur calculée de manière à ce qu'il chauffe et fonde les bandes de matériau de panneau (2) et le corps de matériau de fermeture à glissière (3) de façon uniforme indépendamment de la vitesse (V) qui est modifiée, les bandes de matériau de panneau (2) et le corps de matériau de fermeture à glissière (3) étant soudés les uns aux autres de manière à obtenir qu'une résistance de soudure soit maintenue constante.

2. Appareil tel que revendiqué selon la revendication 1, dans lequel la quantité (Q) est calculée de sorte qu'elle soit proportionnelle à la vitesse (V) prédéterminée.

3. Appareil tel que revendiqué selon l'une quelconque des revendications 1 ou 2, dans lequel les bandes de matériau de panneau (2) sont incurvées le long des rouleaux (1) de sorte qu'elles comportent des parties incurvées formées en leur sein, des jeux/espaces libres ou dégagements de forme conique étant formés entre les parties incurvées et le corps de matériau de fermeture à glissière (3), le dispositif d'irradiation (5) comprenant deux dispositifs d'irradiation qui sont opposés aux jeux de forme conique, les dispositifs d'irradiation (5) irradiant les faisceaux laser (6) sur les bandes de matériau de panneau (2) et sur le corps de matériau de fermeture à glissière (3) dans les jeux de forme conique.

4. Appareil tel que revendiqué selon l'une quelconque des revendications 1 à 3, dans lequel le corps de matériau de fermeture à glissière (3) comprend des éléments mâle(s) et femelle(s) (9, 10) qui incluent des parties adaptées/ajustées et des parties de bride (11), les parties ajustées étant ajustées les unes avec les autres, le dispositif d'irradiation (5) irradiant le faisceau laser (6) sur les bandes de matériau de panneau (2) et sur les parties de bride (11) sur des côtés opposés des parties ajustées de manière à chauffer et à fondre les bandes de matériau de panneau (2) et les parties de bride (11) à l'aide du faisceau laser (6) de telle sorte que les bandes de matériau de panneau (2) et les parties de bride (11) soient soudées les unes aux autres le long de deux lignes soudées (12) sans chauffer les parties ajustées avec le faisceau laser (6).

5. Appareil tel que revendiqué selon la revendication 4, dans lequel le dispositif d'irradiation (5) comprend une source de faisceau laser (13), une lentille sphérique (14) et une plaque en verre (15), la lentille sphérique (14) et la plaque en verre (15) étant interposées entre la source de faisceau laser (13) et les bandes de matériau de panneau (2) ainsi qu'entre la source de faisceau laser (13) et les parties de bride (11), la plaque en verre (15) présentant une section en coupe transversale en forme de V de sorte qu'elle comporte une partie centrale qui fait saillie en direction des bandes de matériau de panneau (2) et des parties de bride (11), le faisceau laser (6) étant agrandi et divisé par la lentille sphérique (14) et par la plaque en verre (15) de telle sorte que les bandes de matériau de panneau (2) et les parties de bride (11) soient soudées les unes aux autres le long de deux lignes soudées (12).

6. Appareil tel que revendiqué selon l'une quelconque des revendications 4 ou 5, dans lequel le dispositif d'irradiation (5) comprend deux dispositifs d'irradiation dont chacun irradie le faisceau laser (6) sur les bandes de matériau de panneau (2) et sur les parties de bride (11) de telle sorte que les bandes de matériau de panneau (2) et les parties de bride (11) soient soudées les unes aux autres le long de deux lignes soudées (12).

7. Appareil tel que revendiqué selon l'une quelconque des revendications 1 à 6, dans lequel un traitement d'absorption de laser est appliqué sur le corps de matériau de fermeture à glissière (3) de telle sorte que le corps de matériau de fermeture à glissière (3) absorbe le faisceau laser (6) de manière à ce qu'il génère de la chaleur, pour chauffer et fondre le corps de matériau de fermeture à glissière (3).
